# EUROPEAN PATENT APPLICATION

(11) **EP 3 266 946 A1**
(43) Date of publication of application: **10.01.2018**
(21) Application number: 17180264.8
(22) Date of filing: 07.07.2017
(51) Int. Cl.: E04B 1/68, E04B 2/70, B32B 5/18, B32B 7/12, B32B 25/00, B32B 5/24, B32B 7/06, C08J 9/36, E04B 1/24

(54) **ACOUSTICAL THERMAL DECOUPLING SYSTEM**

(30) Priority: 07.07.2016 US 201662359263 P
(71) Applicant: Armacell Enterprise GmbH & Co. KG, 12529 Schönefeld OT Waltersdorf (DE)
(72) Inventor: McLean, Bret L., Mebane, NC 27302 (US); Ozkan, Ibrahim Ali, Mebane, NC 27302 (US); Cowan, David A., Mebane, NC 27302 (US)
(74) Representative: Lambacher, Michael

(57) **Abstract**

The present invention relates to an acoustical and thermal decoupling system (10) in a form of a polymer tape that includes a closed-cell foam layer (12) having a front side and a reverse side, a pressure sensitive adhesive (14) coated on the reverse side of the closed-cell foam layer (12), and a release liner (16) covering the pressure sensitive adhesive (14) on the reverse side of the closed-cell foam layer (12). The accoustical and thermal decoupling system (10) may be installed directly to a structural member of a building by removing the release liner (16) from the reverse side of the closed-cell foam layer (12) and pressing the reverse side of the closed-cell foam layer (12) against the structural member, allowing the pressure sensitive adhesive (14) to bond the closed-cell foam layer (12) directly to the structural member.

## Description

### FIELD OF THE INVENTION

The present invention relates to an acoustical, thermal decoupling system in the form of a polymer tape configured to be secured directly to a structural member of a building and a method of decoupling a frame structure of a wall assembly with an acoustical, thermal decoupling system.

### BACKGROUND

The construction industry has moved to lightweight steel and wood framing in interior walls and heavier gauge light weight framing for exterior curtain walls. The move to lightweight framing has largely already occurred in the commercial and residential buildings in the Americas and will continue to spread internationally since it is exhibits a superior value proposition for the builder and owner. However, the use of lightweight steel and wood framing leads to unwanted noise transmitted through the structural members of the buildings.

The prior art for providing acoustic treatment to structural members of buildings is accomplished by decoupling walls from steel or wood studs. Typically, decoupling the wall from a steel or wood stud involves placing steel resilient channels between the wall and the stud, as a standard practice in the industry. However, the assembly process for installing steel resilient channels requires precise and accurate installation by a skilled worker because the steel resilient channels must be custom cut and screwed together as part of the drywall. This type of assembly is prone to failures. Furthermore, steel resilient channels function as thermal bridges between the wall and the studs, thereby reducing the thermal efficiency of the building. Additionally, the efficacy of these steel resilient channel systems over time is unpredictable.

Another attempt in the prior art for acoustic treatment to structural members includes damping tapes and it remains in the elastic range of the stress/strain curve. However, damping tapes exhibit poor sound transmission class (STC) ratings relative to the ASTM E90 curve fitting protocol, thereby having very limited use in commercial buildings. Consequently, steel resilient channels have not been replaced by foam damping tapes in the construction industry even though foam tape products have been available on the market for at least 15 years.

Accordingly, there is a need for a decoupling system that may be assembled with structural members found in both residential and commercial buildings without the need of precise installation. Furthermore, there is a need for a foam tape to replace steel resilient channels, in which the foam tape is capable of dramatically reducing airborne and impact noise from transferring into the structure of the building according to industry standards. Moreover, there is a need for a thermal decoupling system that hinders heat transfer between the stud and the wall in order to increase the thermal efficiency of the building.

### SUMMARY

Disclosed is an acoustical, thermal decoupling system in the form of a polymer tape and a method of decoupling a frame structure of a wall assembly with an acoustical, thermal decoupling system as set forth in the independent claims.

The present invention provides an acoustical, thermal decoupling system in the form of a polymer tape comprising: a closed-cell foam layer having a front side and a reverse side; a pressure sensitive adhesive coated on the reverse side of the closed-cell foam layer; and a release liner covering the pressure sensitive adhesive on the reverse side of the closed-cell foam layer. The acoustical, thermal decoupling system may be installed directly to a structural member of a building by removing the release liner from the reverse side of the closed-cell foam layer by peeling and pressing the reverse side of the closed-cell foam layer against the structural member, allowing the pressure sensitive adhesive to adhere the closed-cell foam layer directly to the structural member. The acoustical, thermal decoupling system may be utilized for isolating wood and steel framing in walls and floors from surrounding or adjacent surfaces.

Once applied to the structural member, the acoustical, thermal decoupling system controls the transfer of generated sound pressure traveling through the air from entering a wall or floor assembly of the building. Consequently, the acoustical, thermal decoupling system controls or limits noise and vibration from entering through the wall or floor assembly, eliminating the need for steel resilient channels to be installed within wall or floor assemblies. The acoustical, thermal decoupling system also provides enhancements over the prior art in the areas of thermal decoupling, air sealing properties, ease of installation, elimination of condensation and static affected ghosting.

The closed-cell foam layer of the acoustical, thermal decoupling system may be a polymeric closed-cell foam layer. The polymeric closed-cell foam layer can be formed by extruding various polymers or polymeric mixtures such that the resulting foam acts as a gas spring. A gas spring is a type of spring that, unlike a typical metal spring, uses a compressed gas contained in a volume in the foam cells, to exert a force. The stress strain curve for such closed-cell foams has three stages, an elastic stage, a subsequent plateau stage and a deformation stage. The density and the tensile strength of the foam control the limits of the elastic phase. Foams in this phase are sometimes used as damping materials. Damping is the removal of energy from the initial force, which usually changes some of the initial force into heat. It has to be mentioned that PVC and EPDM tapes are in the elastic phase but do not provide a foam gas spring. In a foam gas spring the gas is compressed in a cell during the plateau stage of the stress strain curve exerting a force. The foam cells must first pass the elastic stage of the stress strain curve to the point where the gas inside the cells resists the force and before the cells enter the permeate deformation stage. Decoupling using a gas spring, places an opposite force on the initial force, not damping the initial force. Thus, in the plateau phase the gas inside the cells is compressed by the initial force and the gas then creates a return force against the initial force.

The polymeric closed-cell foam layer of the present invention is foamed such that it remains in the plateau phase when applied to the final wall assembly, therein functioning as a gas spring mechanical decoupler within the wall assembly. In order to realize a closed-cell foam layer with foam gas spring characteristics, the closed-cell foam layer of the acoustical, thermal decoupling system comprises NBR (nitrile butadiene rubber) foam and PVC (polyvinyl chloride) foam. Preferably, the closed-cell foam layer of the acoustical, thermal decoupling system comprises NBR foam and PVC foam in the range of 5 wt% to 95 wt% NBR and 95 wt% to 5% wt% PVC, preferably from about 5 wt% to 50 wt% NBR and 50wt% to 5 wt% PVC, more preferably from about 10 wt% to 25 wt% NBR and 50 wt% to 25 wt% PVC.

The density of the closed-cell foam layer may ranges from 1.5 pcf to 4.5 pcf (24.03 kg/m³ to 72.08 kg/m³), preferably from 3.0 pcf to 4.0 pcf (48.06 kg/m³ to 64.07 kg/m³).
The thickness of the closed-cell foam layer may be between 3 mm to 300 mm.

The structural member of the acoustical, thermal decoupling system may be selected from the group consisting of a steel stud, a wood stud, and a gauge steel curtain wall.

The pressure sensitive adhesive of the acoustical, thermal decoupling system may comprise an acrylic adhesive layer, a scrim carrier and a release liner.

Other features and characteristics of the subject matter of this invention, as well as the methods of operation, functions of related elements of structure and the combination of parts, and economies of manufacture, will become more apparent upon consideration of the following description and the appended claims with reference to the accompanying drawings, all of which form a part of this specification, wherein reference numbers designate corresponding parts in the various figures.

### BRIEF DESCRIPTION OF THE DRAWINGS

The accompanying drawings, which are incorporated herein and form part of the specification, illustrate various embodiments of the subject matter of this invention. In the drawings, reference numbers indicate identical or functionally similar elements.
FIG. 1 is a perspective view of the acoustical, thermal decoupling system in the form of a polymer tape according to the present invention;
FIG. 2 is an internal view of an exemplary wood assembly wherein an embodiment of the acoustical, thermal decoupling system according to the present invention is incorporated.

### DETAILED DESCRIPTION

While aspects of the subject matter of the present invention may be embodied in a variety of forms, the following description and accompanying drawings are merely intended to disclose some of these forms as specific examples of the subject matter. Accordingly, the subject matter of this invention is not intended to be limited to the forms or embodiments so described and illustrated.

Unless defined otherwise, all terms of art, notations and other technical terms or terminology used herein have the same meaning as is commonly understood by one of ordinary skill in the art to which this invention belongs. All patents, applications, published applications and other publications referred to herein are incorporated by reference in their entirety. If a definition set forth in this section is contrary to or otherwise inconsistent with a definition set forth in the patents, applications, published applications, and other publications that are herein incorporated by reference, the definition set forth in this section prevails over the definition that is incorporated herein by reference.

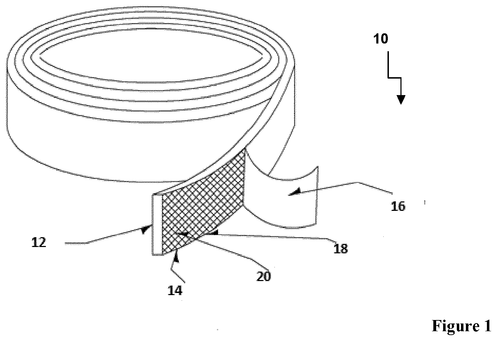

Figure 1 illustrates an acoustical, thermal decoupling system 10 according to an example embodiment of the present invention. The embodiment illustrated in Figure 1 is described as being incorporated in a wooden frame structure of a wall assembly to isolate the wooden frame from surrounding or adjacent surfaces, but it is understood that the acoustical, thermal decoupling system could be used in any number of structural members, such as steel framework or heavy gauge curtain wall assemblies. The acoustical, thermal decoupling system 10 may function in isolating floors/decks from supporting wood, composite wood and steel joists; as well as battens from base floors. The acoustical, thermal decoupling system 10 in the form of polymer tape comprises: a closed-cell foam layer 12 having a front side and a reverse side; a pressure sensitive adhesive 14 coated on the reverse side of the closed-cell foam layer 12 and a release liner 16 covering the pressure sensitive adhesive 14 on the reverse side of the closed-cell foam layer 12.

The decoupling of thermal and vibration transmissions are increased when the closed-cell foam layer 12 comprises NBR foam (nitrile butadiene rubber) and PVC foam (polyvinyl chloride) that provides proper cell wall shear resistance and optimal compressed gas spring.
The closed-cell foam layer 12 can comprise NBR foam and PVC foam in the range from 5 wt% to 95 wt% NBR and 95 wt% to 5 wt% PVC. Preferably, NBR foam and PVC foam ranges from about 5 wt% to 50 wt% NBR and 50 wt% to 5 wt% PVC. More preferably, NBR foam and PVC foam ranges from about 10 wt% to 25 wt% NBR and 25 wt% to 50% PVC. The remaining wt% is a list of nucleating agents, fillers, blowing agent cocktails, lubricants, etc. that are not pertinent to this patent. An acoustical, thermal decoupling system comprising a closed-cell foam layer with a NBR foam and a PVC foam in the above mentioned range can affect the length and slope of the stages of the stress strain curve and thus, shows a more effective decoupling. The closed-cell foam layer tensile strength affects the length of the elastic stage and can vary the required clamping force. The tensile strength is determined by the clamping force of the assembly.

The density of the closed-cell foam layer 12 ranges from about 1.5 pcf (24.03 kg/m³) to 4.5 pcf (72.08 kg/m³), preferably from 3.0 pcf (48.06 kg/m³) to 4.0 pcf (64.07 kg/m³). An acoustical, thermal decoupling system comprising a closed-cell foam layer with the above mentioned density range can also vary the elastic stage as the cell walls thickness would affect the tensile strength of the resulting foam, and thus, shows a more effective decoupling. The tensile strength is determined by the clamping force of the assembly.

The structural member of the acoustical, thermal decoupling system 10 may be selected from the group consisting of a steel stud, a wood stud, and a structure member which can be steel, wood or some other structural building material.

The pressure sensitive adhesive of the acoustical, thermal decoupling system 10 may comprises an acrylic adhesive layer, a scrim carrier and a release liner. The pressure sensitive adhesive may be e.g. a 2 mm acrylic adhesive layer and a release liner such as those produced by 3F GmbH, and which is applied to the decoupling system 10.

The closed-cell foam layer 12 may be an Armacell^{®} foam. The closed-cell foam layer 12 can vary in thickness from 3 mm to 300 mm but the pressure sensitive adhesive 14 and release liner 16 will be independent of the foam thickness. The pressure sensitive layer 14 may be comprised of a plurality of adhesive layers 18 and reinforcing layer 20. Overall, the acoustical, thermal decoupling system 10 can be produced in thicknesses ranging from 1/8 inch (0.32 cm) up to 2 inch (5.08 cm) thick and widths ranging from ½ inch (1.27 cm) to 48 inches (121.92 cm) wide.

The acoustical, thermal decoupling system 10 can be installed directly to a wood or steel stud by first removing the release liner 16 from the reverse side of the closed-cell foam layer 12. In removing the release liner 16, the pressure sensitive adhesive 14 is exposed on the reverse side of the closed-cell foam layer 12. Then, the reverse side of the closed-cell foam layer 12 may be pressed against (the exterior surface of) the wood or steel stud, thereby allowing the pressure sensitive adhesive 14 to bond the closed-cell foam layer 12 directly to the wood or steel stud. Essentially, the pressure sensitive adhesive 14 allows the acoustical, thermal decoupling system 10 to be applied to structural members in a 'peel and stick' manner. As a result, the acoustical, thermal decoupling system 10 may replace or eliminate the need of using steel resilient channels in the construction of commercial and residential structures. Then, e.g. a drywall is mounted against the studs of the wall assembly with the closed-cell foam layer 12 disposed between an interior surface of the drywall and the exterior surface of each stud.

When mounting the drywall against the studs, preferably a clamping force (clamping pressure) has to be applied in order to achieve a 25% compression of the tape, so that the foam is taken out of the elastic phase and into the plateau phase.

Thus, the transfer of generated sound pressure traveling through the wall assembly by the closed-cell foam layer 12 is controlled.

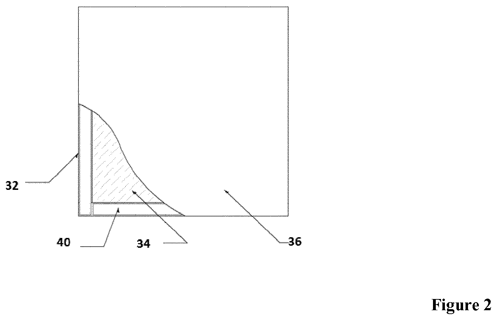

Figure 2 illustrates an exemplary wall assembly containing an embodiment of the acoustical, thermal decoupling system. The wall assembly comprises a wood or metal framework 32 and fiberglass or mineral wool batting 34 between all wood or metal components the framework to form a mounting surface for a gypsum board or other wall panel material wall 36. The acoustical, thermal decoupling system 40 is applied along an exterior surface of each stud or framing member separating the studs or framing members from the gypsum board or other wall panel material 36. When positioned between the stud (framing member) 32 and the gypsum board wall surface material 36, a clamping force is created on the decoupling tape. That force determines the required length of the elastic phase, controlling the required tensile strength and density of the decoupling tape. The clamping force places the tape in the plateau phase of the stess/strain curve where the gas inside of the cells can act as a gas spring. The resultant acoustical, thermal decoupling system 34 controls the transfer of generated sound pressure traveling through the air from entering the building's structure. Consequently, the acoustical, thermal decoupling system (limits) controls noise and vibration from entering through the wall assembly.

Furthermore, the acoustical, thermal decoupling system is capable of receiving attaching screws in a manner that relieves stored energy from standard dry wall screws applied by dry wall screw guns. Thus, the acoustical, thermal decoupling system 10 is formulated to manage or minimally store the energy that is applied to it during installation of the assembly screws. As a result, assembly screws may cut through the acoustical, thermal decoupling system without tearing the foam layer, thereby relieving a prescriptive amount of the stored compression energy around the area of screw penetration. Therefore, the acoustical, thermal decoupling provides an improvement over foam tapes of the prior art, which are notorious for delaminating or popping drywall tape and even the drywall itself.

The acoustic performance of the acoustical, thermal decoupling system 10 is compared to other noise management systems of the related art with the results shown in Table 1.

**Table 1:**

| **Wood assemblies** | | | | | | | | | |
|---|---|---|---|---|---|---|---|---|---|
| Formula | NBR in wt% | PVC in wt% | Density in pcf | Tensile strength in psi | 25% compression in psi | Cell structure | STC in dB | Delta STC | Notes |
| A | 7-9 | 18-20 | 3.5-5.0 | 50 | 2.0-5.0 | closed | 37 | 3 | |
| B | 14-17 | 30-34 | 12.0-18.0 | 90 | 6.0-12.0 | closed | 36 | 2 | |
| C | 14-17 | 30-34 | 3.5-5.5 | 40 | 1.5-3.5 | closed | 41 | 7 | |
| D | 20-22 | 14-16 | 2.5-4.5 | 35 | 1.5-3.5 | closed | 41 | 7 | |
| E | N/A | N/A | 6.0-10.0 | 75 | 5.0-11.0 | closed | 38 | 4 | |

| Control (wood): no decoupler | | | | | | | 34 | 0 | |
|---|---|---|---|---|---|---|---|---|---|
| **Steel assemblies** | | | | | | | | | |
| F | 15-17 | 30-33 | 2.5-4.5 | 35 | 1.5-3.5 | closed | 55 | 7 | 1) |
| F | 15-17 | 30-33 | 2.5-4.5 | 35 | 1.5-3.5 | closed | 51 | 7 | 2) |
| Control (steel): no decoupler | | | | | | | 44 | 0 | |
| Norton™ CST PVC | | | | | | | 45 | 1 | |
| Sound prooving tape EPDM | | | | | | | 41 | -3 | |
| Steel Spring Mechanical decoupler RC-1 (industry standard) | | | | | | | 54 | 6 | |

| | | | | | | | | | |
|---|---|---|---|---|---|---|---|---|---|
| 1) Two layers of 5/6 gypsum 2) Single layer of 5/8 " gypsum | | | | | | | | | |

The standard metric for comparing acoustic performance is a sound transmission class (STC) rating calculated in accordance with an ASTM E90 test. In particular, the STC rating is a calculated value considering multiple frequencies per the ASTM E90 curve fitting approach. Table 1 compares the STC rating in dB between the acoustical, thermal decoupling system 10 according to the invention in wood assemblies (Formulas A, B, C, D and E) and in steel assemblies (Formulas F), Norton^{™} CST decoupling tape, a sound proofing tape, and a steel resilient channel (20 gauge steel = 0.0375 inch; 0.953 mm). In the column "Delta STC" the STC-values for the different formulas and prior art systems are compared to the control group, i.e. to the control wood assembly without a decoupler and to the control steel assembly without a decoupler, respectively.

Formula A shows a good STC-value compared to the control group (Delta STC = 3), however, it looks like it is too close to the elastic phase. Formulas C and D show excellent STC-values (Delta STC = 7) and thus, are preferred acoustical, thermal decoupling systems.

The metal spring decoupler is 25 gauge steel industry standard. As it can be seen, it is in the plateau phase and is an excellent decoupler.

In one example, the acoustical, thermal decoupling system according to the invention comprises 32.7 wt% of PVC (tensile strength of 8 psi) and 14.2 wt% of NBR (tensile strength of 1450 psi).

The STC ratings shown in Table 1 were calculated by testing each noise management system with steel studs and layers of drywall placed on each side of the steel stud. As shown in Table 1, the acoustical, thermal decoupling system according to the present invention performs as well as and even better than steel resilient channels in the standard steel framing systems. The acoustical, thermal decoupling system according to the present invention performed better than all other decoupling/damping systems (e.g. Norton^{™} CST (Delta STC = 1) and sound proofing tape (Delta STC = -3, thus acting as a sound amplifier) shown in Table 1. The acoustical, thermal decoupling system according to the present invention can maintain a verified ASTM E90 STC rating of 55 with steel studs, 48 with wood studs and 50 for r18 gauge steel curtain wall assemblies.

In summary, the acoustical, thermal decoupling system 10 according to the present invention provides a closed-cell foam tape that decouples structural and non-structural components of the building therein, resulting in a reduction of air borne sound into the form of structure borne sound. Thus, one having ordinary skill in the art would recognize the advantage from the acoustical, thermal decoupling system in providing a polymer tape equivalent to a steel resilient channel with enhancements over a steel resilient channel through the effects of thermal decoupling, air sealing properties, ease of installation, elimination of condensation and static affected ghosting. Furthermore, the acoustical, thermal decoupling system may be applied to multistory, multiuse, residential and commercial buildings requiring one and possibly two hour fire ratings for "rated" and "unrated" interior walls.

While the subject matter of this invention has been described and shown in considerable detail with reference to certain illustrative embodiments, including various combinations and sub-combinations of features, those skilled in the art will readily appreciate other embodiments and variations and modifications thereof as encompassed within the scope of the present disclosure. Moreover, the descriptions of such embodiments, combinations, and sub-combinations is not intended to convey that the claimed subject matter requires features or combinations of features other than those expressly recited in the claims. Accordingly, the scope of this invention is intended to include all modifications and variations encompassed within the scope of the following appended claims.

## Claims

1. An acoustical, thermal decoupling system (10) in the form of a polymer tape comprising:
a closed-cell foam layer (12) having a front side and a reverse side;
a pressure sensitive adhesive (14) coated on the reverse side of the closed-cell foam layer (12); and
a release liner (16) covering the pressure sensitive adhesive (14) on the reverse side of the closed-cell foam layer (12);
wherein the release liner (16) is configured to be removed from the reverse side of the closed-cell foam layer (12) by peeling;
wherein the pressure sensitive adhesive is configured to be adhered directly to a structural member of a building.

2. The decoupling system (10) according to claim 1, wherein the closed-cell foam layer (12) comprises NBR foam and PVC foam.

3. The decoupling system (10) according to claim 1 or 2, wherein the closed-cell foam layer (12) comprises NBR foam and PVC foam in the range from 5 wt% to 95 wt% NBR and 95 wt% to 5% wt% PVC, preferably from about 5 wt% to 50 wt% NBR and 50 wt% to 5 wt% PVC, more preferably from about 10 wt% to 25 wt% NBR and 50 wt% to 25 wt% PVC.

4. The decoupling system (10) according to any of the preceding claims, wherein the density of the closed-cell foam layer (12) ranges from about 1.5 pcf to 4.5 pcf (24.03 kg/m³ to 72.08 kg/m³), preferably from 3.0 pcf to 4.0 pcf (48.06 kg/m³ to 64.07 kg/m³).

5. The decoupling system (10) according to any of the preceding claims, wherein the structural member is selected from the group consisting of a steel stud, a wood stud, and a gauge steel curtain wall.

6. The decoupling system (10) according to any of the preceding claims, wherein the pressure sensitive adhesive (14) comprises an acrylic adhesive layer, a scrim carrier and a release liner.

7. The decoupling system (10) according to any of the preceding claims, wherein the thickness of the closed-cell foam layer (12) is between 3 mm to 300 mm.

8. A method of decoupling a frame structure of a wall assembly with an acoustical, thermal decoupling system (10) according to any of claims 1 to 7, the wall assembly comprising a plurality of studs and a drywall, the method comprising:
removing the release liner (16) from the reverse side of the closed-cell foam layer (12);
pressing the reverse side of the closed-cell foam layer (12) against an exterior surface of each stud;
mounting the drywall against the studs of the wall assembly with the closed-cell foam layer (12) disposed between an interior surface of the drywall and the exterior surface of each stud;
controlling the transfer of generated sound pressure traveling through the wall assembly by the closed-cell foam layer (12).

9. The method according to claim 8, wherein the closed-cell foam layer (12) comprises NBR foam and PVC foam.

10. The method according to claim 8 or 9, wherein the closed-cell foam layer (12) comprises NBR foam and PVC foam in the range from 5 wt% to 95 wt% NBR and 95 wt% to 5% wt% PVC, preferably from about 5 wt% to 50wt% NBR and 50 wt% to 5 wt% PVC, more preferably from about 10 wt% to 25 wt% NBR and 50 wt% to 25 wt% PVC.

11. The method according to any of claims 8 to 10, wherein the density of the closed-cell foam layer (12) ranges from about 24,03 kg/m³ to 72,08 kg/m³, preferably from 48,06 kg/m³ to 64,07 kg/m³.

12. The method according to any of claims 8 to 11, wherein the stud is selected from the group consisting of a steel stud, a wood stud, and a gauge steel curtain wall.

13. The method according to any of claims 8 to 12, wherein the pressure sensitive adhesive (14) comprises an adhesive layer, a scrim carrier and a release line.

14. The method according to any of claims 8 to 13, wherein a thickness of the closed-cell foam layer (12) is between 3 mm to 300 mm.

15. Use of an acoustical, thermal decoupling system (10) according to any of claims 1 to 7 for isolating wood and steel framing in walls and floors from surrounding or adjacent surfaces.
